# EUROPÄISCHE PATENTANMELDUNG

(11) **EP 0 685 381 A1**
(43) Veröffentlichungstag der Anmeldung: **06.12.1995**
(21) Anmeldenummer: 95810318.6
(22) Anmeldetag: 11.05.1995
(51) Int. Cl.: B62D 33/04, B62D 33/06

(54) **Kabine für Fahrzeuge und Gerätschaften**

(30) Priorität: 31.05.1994 CH 1685/94
(71) Anmelder: Alusuisse-Lonza Services AG, CH-8212 Neuhausen am Rheinfall (CH)
(72) Erfinder: Röllin, Ulrich, CH-8048 Zürich (CH); Kreuzwirth, Peter, CH-8957 Spreitenbach (CH)

(57) **Zusammenfassung**

Eine Kabine für Fahrzeuge und Gerätschaften weist eine aus einzelnen Strukturbauteilen (12,14,16,18,20,22,24,26) zusammengesetzte Aufbaustruktur (10) auf. Hierbei weisen die Strukturbauteile (12,14,16,18,20,22,24,26) an den für den Zusammenbau vorgesehenen Stellen mindestens eine positive und/oder negative Profilkonfiguration auf, wobei eine positive Profilkonfiguration mit einer negativen Profilkonfiguration jeweils eine Verbindungseinheit bildet.

Die negative Profilkonfiguration weist die Form einer hinterschnittenen Nut (38) und die positive Profilkonfiguration ein Gegenglied (40,43,45) auf, wobei das Gegenglied (40,43,45) mittels eines Nutensteins (42) oder mittels einer angeformten Clipverbindung in der Nut (38) verankert ist.

## Beschreibung

Die Erfindung betrifft eine Kabine für Fahrzeuge und Gerätschaften, mit einer aus einzelnen Strukturbauteilen zusammengesetzten Aufbaustruktur.

Kabinen der genannten Art werden beispielsweise als Führerkabinen für Krane, Landwirtschafts- und Kommunalfahrzeuge sowie für verschiedene Lastkraftwagen eingesetzt. Die hierzu erforderlichen Aufbaustrukturen bestehen üblicherweise aus verformten Stahl- oder Aluminiumblechen, welche mit Kunststoff- oder Glassegmenten ergänzt werden. Vor dem Innenausbau wird die Rohstruktur jeweils als gesamte Einheit lackiert.

Angesichts dieser Gegebenheiten hat sich der Erfinder die Aufgabe gestellt, eine Kabine der eingangs erwähnten Art derart zu gestalten, dass die einzelnen Strukturbauteile fertig lackiert zur Rohstruktur bzw. ganze Module zur fertigen Kabine einschliesslich des Basisinnenausbaus zusammengefügt werden können.

Zur erfindungsgemässen Lösung der Aufgabe führt, dass die Strukturbauteile an den für den Zusammenbau vorgesehenen Stellen mindestens eine positive und/oder negative Profilkonfiguration aufweisen, wobei eine positive Profilkonfiguration mit einer negativen Profilkonfiguration jeweils eine Verbindungseinheit bildet.

Spezielle und weiterbildende Ausführungsarten der erfindungsgemässen Kabine sind Gegenstand von abhängigen Patentansprüchen.

Bevorzugt sind die Strukturbauteile aus stranggepresstem Aluminium, Kunststoff oder Stahl gefertigt, wobei die Strukturbauteile auch als Module ausgebildet sein können.

Ein wesentliches Merkmal der erfindungsgemässen Kabine wird darin gesehen, dass Aluminium-, Stahl- oder Kunststoffteile im Detail so ausgebildet werden, dass diese immer dieselben, angeformten Profilkonfigurationen beinhalten, welche einen einfachen Zusammenbau von Struktur- und Modulbauteilen ermöglichen. Hierbei ist jeweils zwischen einer positiven und einer negativen Profilkonfiguration zu unterscheiden.

Bei einer bevorzugten Ausführungsform der erfindungsgemässen Kabine weist die negative Profilkonfiguration die Form einer hinterschnittenen Nut und die positive Profilkonfiguration ein Gegenglied auf, wobei das Gegenglied mittels eines Nutensteins oder mittels einer angeformten Clipverbindung in der Nut verankert ist.

Einzelne Strukturbauteile können auch in Verbundbauweise -- zumeist als Module bzw. modulare Baugruppen -- gefertigt sein, wobei zu beachten ist, dass auch diese Bauteile die ein- bis mehrfache Kupplungskonfiguration (positive und negative Profilkonfiguration) aufweisen. Sämtliche Strukturbauteile können somit mit den gleichen Verbindungselementen verbunden werden.

Zur Befestigung einer Innenverschalung oder auch einer Aussenverschalung sind an gewissen Stellen der Strukturbauteile Klettverschlussteile vorgesehen. Diese Klettverschlussteile können auflaminiert, aufgeklebt oder beispielsweise mit der negativen Profilkonfiguration über ein Hilfsprofil lösbar verbunden sein. Mit diesem Konzept der Gleichschaltung von Verbundbaugruppen und Strukturprofilen wird der Einbau der Innen- oder Aussenverschalung in analoger Befestigungstechnik ohne zusätzliche Hilfsmittel ermöglicht. Je nach Werkstoffwahl und Detailausbildung der Klettverschlüsse kann das bekannte, statische Aufladen der Kabine eliminiert werden.

Der Klettverschluss kann bei den Baugruppen einfach auflaminiert werden. Bei den Strukturprofilen kann der Klettverschluss in der üblichen Art aufgeklebt oder mit der erwähnten Profilkonfiguration partiell oder durchlaufend jederzeit lösbar verbunden werden.

Durch das erfindungsgemässe Zusammenfügen einzelner Strukturprofile bzw. Verbundbaugruppen kann auf einfache Weise erreicht werden, dass keine metallischen Direktverbindungen von den Strukturbauteilen zur Verkleidung vorhanden sind. Dies kann unter anderem dadurch erreicht werden, dass gewisse Verbindungsteile nicht aus einem metallischen Werkstoff bestehen oder die Innenverkleidung nur auf der Klettverschlussverbindung basiert. Andererseits kann eine durchgehende metallische Aussenstruktur, wie sie bei einem Faraday-Käfig erwünscht ist, gewährleistet werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine erste Ausführungsform eines Kabinengerippes;
- Fig. 2 einen Schnitt durch Fig. 1 gemäss deren Linie I-I;
- Fig. 3 einen Schnitt durch Fig. 1 gemäss deren Linie II-II;
- Fig. 4 einen Schnitt durch Fig. 1 gemäss deren Linie III-III;

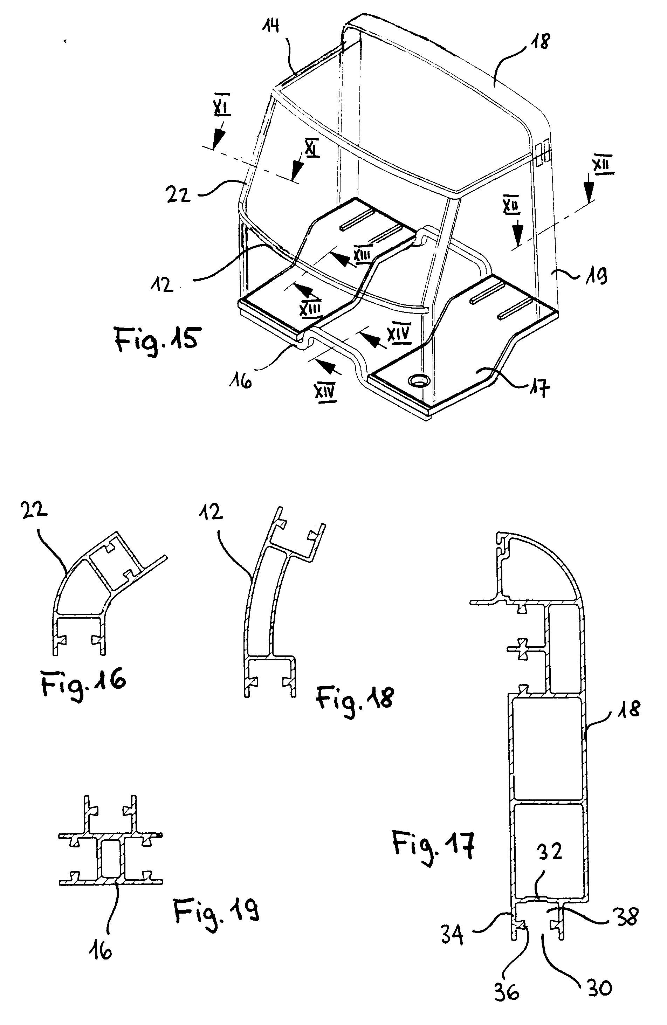

- Fig. 5 eine Schrägsicht auf eine zweite Ausführungsform eines Kabinengerippes;
- Fig. 6 einen Schnitt durch Fig. 5 gemäss deren Linie IV-IV;
- Fig. 7a, 7b und 7c einen Schnitt durch drei verschiedene Varianten von Fig. 5 gemäss deren Linie V-V;
- Fig. 8 eine Schrägsicht auf eine dritte Ausführungsform eines Kabinengerippes;
- Fig. 9 einen Schnitt durch Fig. 8 gemäss deren Linie VI-VI;

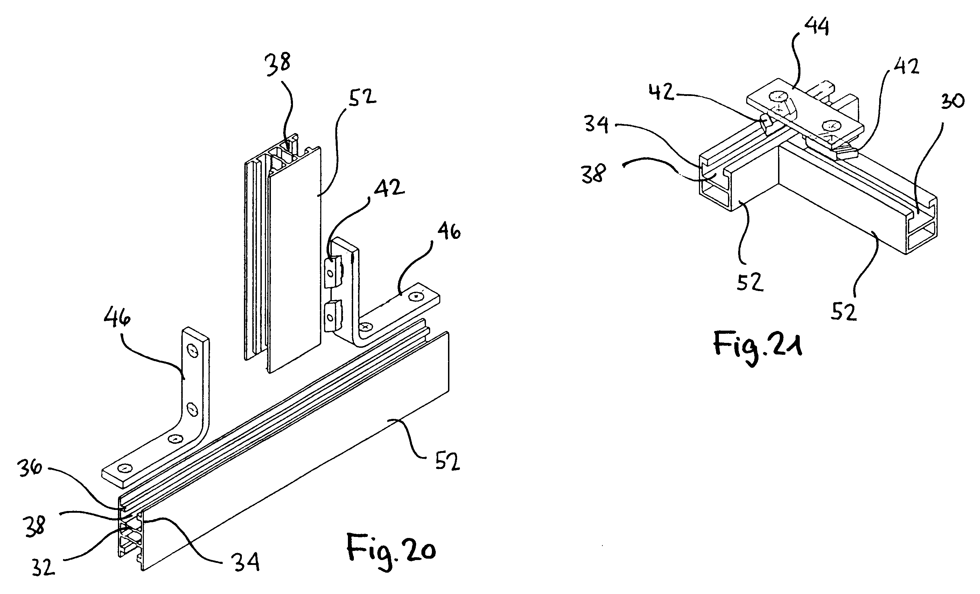

- Fig. 10 einen Schnitt durch Fig. 8 gemäss deren Linie VII-VII;
- Fig. 11 eine Schrägsicht auf eine vierte Ausführungsform eines Kabinengerippes;
- Fig. 12 einen Schnitt durch Fig. 11 gemäss deren Linie VIII-VIII;
- Fig. 13 einen Schnitt durch Fig. 11 gemäss deren Linie IX-IX;
- Fig. 14 einen Schnitt durch Fig. 11 gemäss deren Linie X-X;
- Fig. 15 eine Schrägsicht auf eine fünfte Ausführungsform eines Kabinengerippes;
- Fig. 16 einen Schnitt durch Fig. 15 gemäss deren Linie XI-XI;
- Fig. 17 einen Schnitt durch Fig. 15 gemäss deren Linie XII-XII;
- Fig. 18 einen Schnitt durch Fig. 15 gemäss deren Linie XIII-XIII;
- Fig. 19 einen Schnitt durch Fig. 15 gemäss deren Linie XIV-XIV;
- Fig. 20 eine Schrägsicht auf eine erste Variante zum Verbinden von Strukturprofilen;
- Fig. 21 eine Schrägsicht auf eine zweite Variante zum Verbinden von Strukturprofilen.

Ein Kabinengerippe 10 umfasst einen Frontgurt 12, einen Dachrahmen 14, Plattformprofile 16, einen Ueberrollbügel 18 bzw. Heckrahmen 20 sowie Frontpfosten 22. Die einzelnen Elemente des Kabinengerippes 10 werden nachfolgend insgesamt als Strukturbauteile bezeichnet.

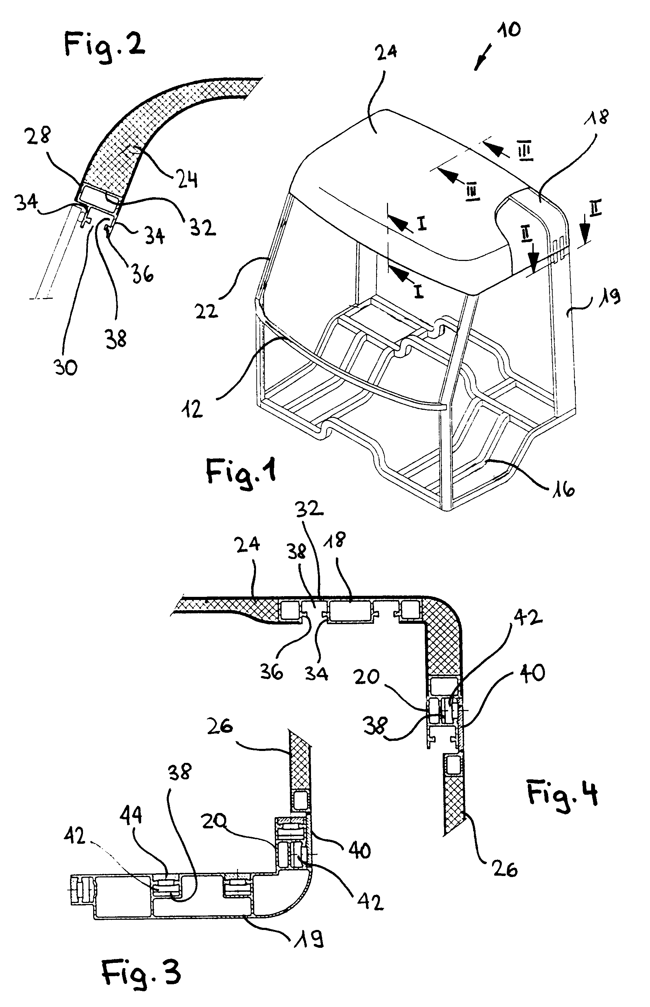

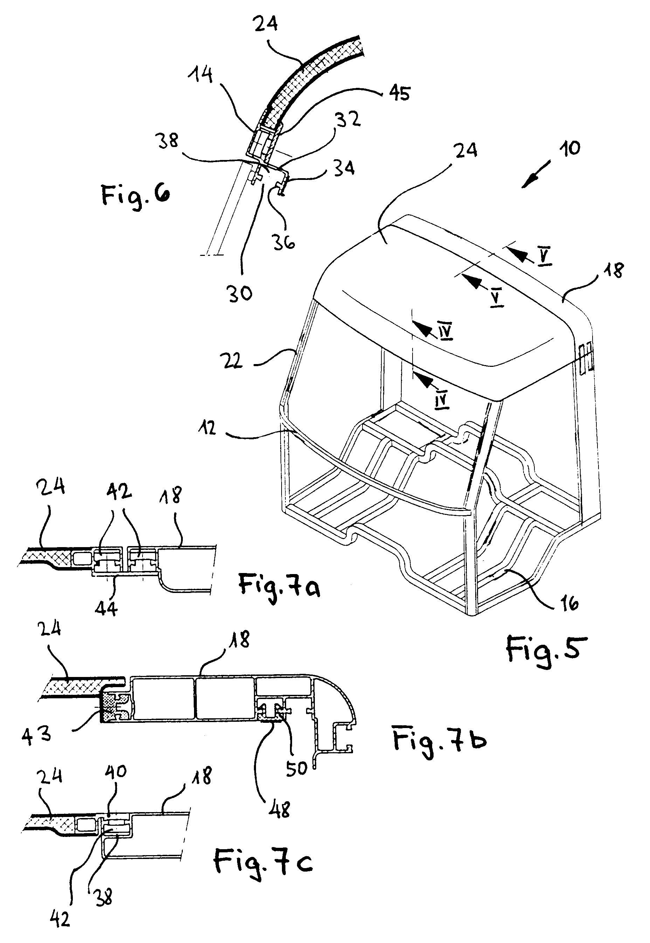

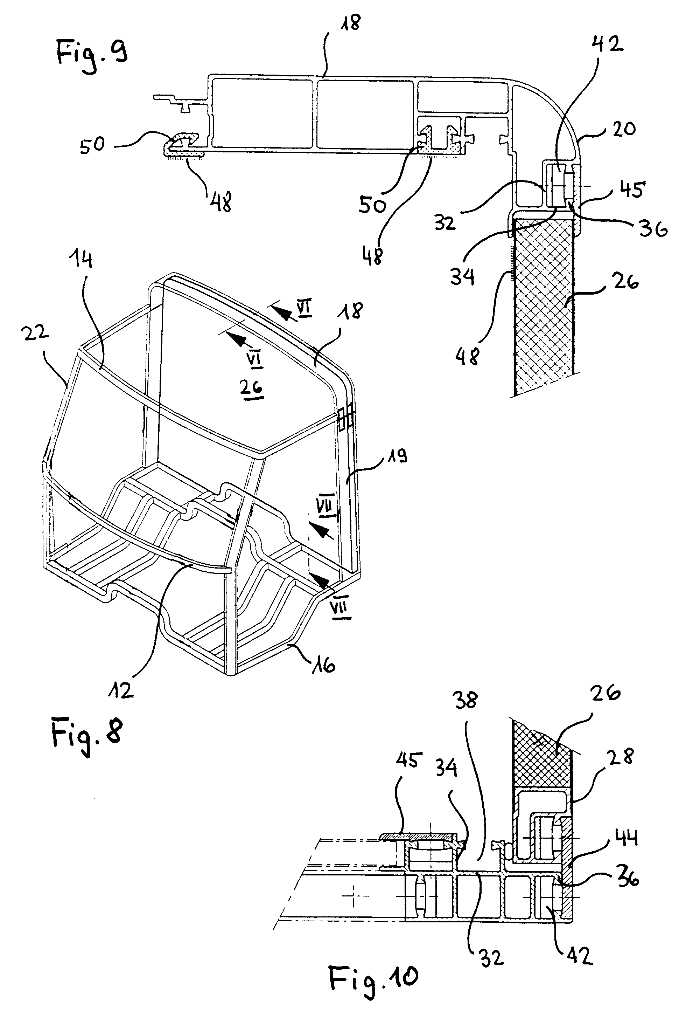

Bei der in Fig. 1 bis 4 dargestellten Ausführungsform ist ein Kabinendach 24 in Verbundbauweise als Modul bzw. modulare Baugruppe vorgesehen. Hierbei ist der Ueberrollbügel 18 sowie ein Teil des Heckrahmens 20 in das Dach integriert. Die Verbindung zwischen den einzelnen Strukturbauteilen untereinander erfolgt durch Verschraubung der Strukturprofile, wobei diese im Verbindungsbereich jeweils eine positive bzw. negative Profilkonfiguration aufweisen.

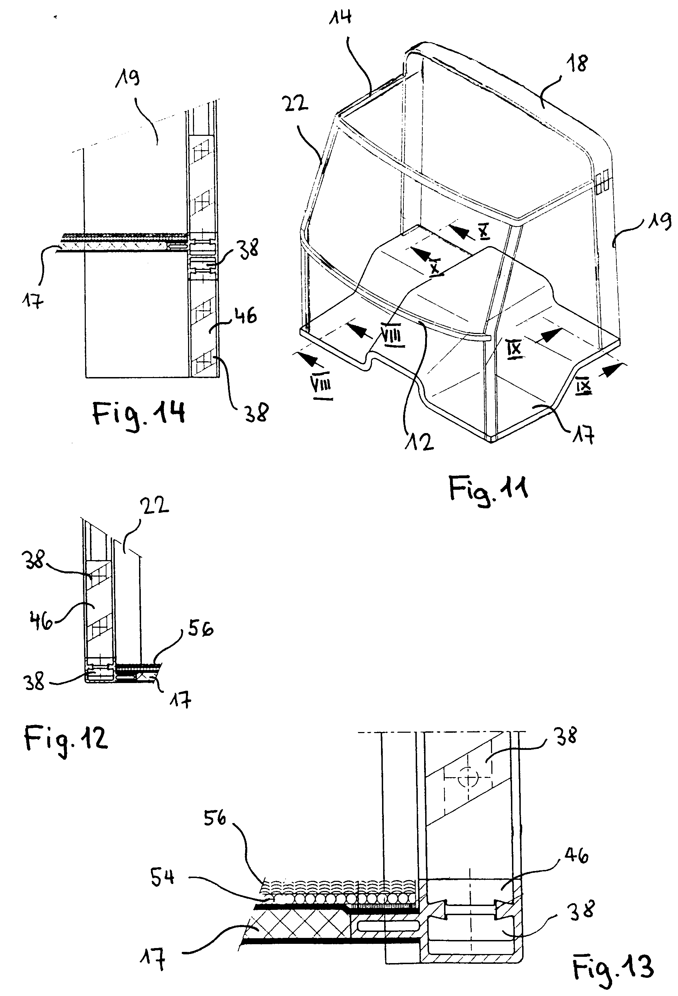

Die negative Profilkonfiguration weist eine U-förmige Rinne mit einem Bodenstreifen 32 sowie zwei rechtwinklig von diesem abragenden Seitenstreifen 34 auf. An den einander gegenüberstehenden Seitenstreifen 34 ist je ein nach innen gerichteter und konisch auseinanderlaufender Seitensteg derart angeformt, dass die U-förmige Rinne 30 mit den Seitenstegen 36 insgesamt eine hinterschnittene Nut 38 bildet. Wie insbesondere aus Fig. 3 und 4 ersichtlich, wird die positive Profilkonfiguration durch einen Profilstreifen 40 gebildet, der mittels eines als parallelogrammförmiges Plättchen ausgebildeten Nutensteins 42, der jeweils in die hinterschnittene Nut 38 eingeführt wird, mit der negativen Profilkonfiguration verschraubt. Der Profilstreifen 40 ist hier als Randprofil in die in Verbundbauweise gefertigte Heckwand 26 integriert. In analoger Weise ist gemäss Fig. 2 im Kabinendach 24 ein integriertes Randprofil 28 mit negativer Profilkonfiguration vorgesehen. Die Kraftübertragung an der Verbindungsstelle des Ueberrollbügels 18 vom Dach 24 in die Seitenwandpartie 19 erfolgt ebenfalls über positive und negative Profilkonfigurationen. Wie insbesondere aus Fig. 3 hervorgeht, erfolgt die Schraubverbindung über eine Verbindungsplatte 44, wie sie weiter unten im Zusammenhang mit Fig. 21 erläutert ist. Die Schraubverbindungen werden dahin entlastet, dass mittels Bauteilüberlappungen jeweils die erforderlichen Kräfteübertragungen gewährleistet sind.

In Fig. 6 ist eine Dachvariante dargestellt, bei welcher das Kabinendach 24 vom Dachrahmen 14 durch eine als Klemmplatte 45 ausgestaltete positive Profilkonfiguration ausgestaltet ist.

In den Fig. 7a, 7b und 7c sind verschiedene Varianten für den Anschluss des Kabinendachs 24 am Ueberrollbügel 18 dargestellt. In Fig. 7a erfolgt diese Verbindung über eine Verbindungsplatte 44, in Fig. 7b über ein am Kabinendach 24 festgelegtes Gegenglied 43 -- hier eine angeformte Clipverbindung -- und in Fig. 7c über einen Profilstreifen 40, der als Randprofil in das Kabinendach 24 integriert ist.

Insbesondere aus Fig. 8 sind verschiedene Anordnungen von Klettverschlussstreifen 48 dargestellt. Diese Klettverschlussstreifen dienen dem Einbau einer Innenverschalung 56 und sind entweder direkt auf die Strukturteile aufgeklebt bzw. auflaminiert oder mittels eines Hilfsprofils 50 mit Schnappverschluss lösbar mit einer negativen Profilkonfiguration verbunden.

In Fig. 13 ist zwischen der Innenverschalung 56 und der in Verbundbauweise gefertigten Plattform 17 eine Geräusche absorbierende Zwischenfolie 54 angeordnet.

Die Fig. 16 bis 19 zeigen verschiedene Ausführungsformen von Strukturprofilen mit einer oder mehreren negativen Profilkonfigurationen.

In Fig. 20 und 21 sind die Hauptelemente einer Verbindung zwischen zwei stumpf aufeinandertreffenden Strukturprofilen 52 dargestellt. Die Verbindung der Strukturprofile 52, welche eine negative Profilkonfiguration aufweisen, erfolgt mittels eines Verbindungswinkels 46 oder einer Verbindungsplatte 44 als positive Profilkonfiguration über in der hinterschnittenen Nut 38 angeordnete Nutensteine 42.

## Patentansprüche

1. Kabine für Fahrzeuge und Gerätschaften, mit einer aus einzelnen Strukturbauteilen zusammengesetzten Aufbaustruktur,
dadurch gekennzeichnet,
dass die Strukturbauteile (12,14,16,18,20,22,24,26) an den für den Zusammenbau vorgesehenen Stellen mindestens eine positive und/oder negative Profilkonfiguration aufweisen, wobei eine positive Profilkonfiguration mit einer negativen Profilkonfiguration jeweils eine Verbindungseinheit bildet.

2. Kabine nach Anspruch 1, dadurch gekennzeichnet, dass die Strukturbauteile (12,14,16,18,20,22,24,26) aus stranggepresstem Aluminium, Kunststoff oder Stahl gefertigt sind.

3. Kabine nach Anspruch 1 oder 2, dadurch gekennzeichnet, dass die Strukturbauteile als Module (24) ausgebildet sind.

4. Kabine nach einem der Ansprüche 1 bis 3, dadurch gekennzeichnet, dass die negative Profilkonfiguration die Form einer hinterschnittenen Nut (38) und die positive Profilkonfiguration ein Gegenglied (40,43,45) aufweist, wobei das Gegenglied (40,43,45) mittels eines Nutensteins (42) oder mittels einer angeformten Clipverbindung in der Nut (38) verankert ist.

5. Kabine nach einem der Ansprüche 1 bis 4, dadurch gekennzeichnet, dass die Strukturbauteile (12,14,16,18,20, 22,24,26) in Verbundbauweise gefertigt sind.

6. Kabine nach einem der Ansprüche 1 bis 5, dadurch gekennzeichnet, dass an den Strukturbauteilen (12,14,16,18, 20,22,24,26) Klettverschlussteile (48) zur Befestigung einer Innenverschalung (56) oder Aussenverschalung angeordnet sind.

7. Kabine nach Anspruch 6, dadurch gekennzeichnet, dass zwischen Innenverschalung (56) oder Aussenverschalung und den Strukturbauteilen (12,14,16,18,20,22,24,26) eine Geräusche absorbierende Zwischenfolie (54) eingelegt ist.

8. Kabine nach Anspruch 6, dadurch gekennzeichnet, dass die Klettverschlussteile (48) aufgeklebt, auflaminiert oder mit der negativen Profilkonfiguration über ein Hilfsprofil (50) lösbar verbunden ist.

9. Kabine nach einem der Ansprüche 1 bis 8, dadurch gekennzeichnet, dass keine metallischen Direktverbindungen von den Strukturbauteilen (12,14,16,18,20,22,24,26) zur Innenverschalung (56) oder Aussenverschalung vorhanden sind.
